# EUROPEAN PATENT SPECIFICATION

(11) **EP 2 925 067 B1**
(45) Date of publication and mention of the grant of the patent: **28.02.2018**
(21) Application number: 12890658.3
(22) Date of filing: 31.12.2012
(51) Int. Cl.: H04W 72/04, H04W 8/00

(54) **DEVICE-TO-DEVICE COMMUNICATION METHOD, APPARATUS AND SYSTEM**
VORRICHTUNG-ZU-VORRICHTUNG-KOMMUNIKATIONSVERFAHREN UND -SYSTEM
PROCÉDÉ, APPAREIL ET SYSTÈME DE COMMUNICATION ENTRE DES DISPOSITIFS

(43) Date of publication of application: 30.09.2015
(73) Proprietor: Huawei Technologies Co., Ltd., Longgang District Shenzhen, Guangdong 518129 (CN)
(72) Inventor: ZHANG, Weiliang, Shenzhen Guangdong 518129 (CN); WANG, Qiang, Shenzhen Guangdong 518129 (CN); MA, Jie, Shenzhen Guangdong 518129 (CN); TANG, Qirong, Shenzhen Guangdong 518129 (CN)
(74) Representative: Pfenning, Meinig & Partner mbB
(86) International application number: PCT/CN2012/088137
(87) International publication number: WO 2014/101234

(56) References cited:
- WO-A1-01/15387
- CN-A- 101 902 822
- CN-A- 102 316 587
- US-A1- 2011 258 313
- "3rd Generation Partnership Project; Technical Specification Group RAN; Study on LTE Device to Device Proximity Services-Radio Aspects; (Release 12)", 3GPP STANDARD; 3GPP TR 36.843, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V0.2.0, 8 October 2013 (2013-10-08), pages 1-21, XP050729415, [retrieved on 2013-10-08]

## Description

### TECHNICAL FIELD

Embodiments of the present invention relate to the field of communications technologies, and in particular, to a device-to-device communication method, apparatus, and system.

### BACKGROUND

Device-to-device (Device to Device, D2D) communication refers to direct communication between two communication devices. With the development of mobile communications technologies, implementation of D2D communication in a mobile communications system has become a beneficial supplement in future mobile communications technologies. D2D communication may be applied in various application scenarios. For example, in a social network application, D2D communication may be used to discover nearby friends or people with same hobbies and interests; in an advertisement application, D2D communication may be used to view nearby discount information; in a location-based service, D2D communication may be used to query nearby restaurants and the like.

How to implement proximity discovery becomes very critical during implementation of D2D communication between mobile terminals in a mobile communications network, where the proximity discovery refers to that a feature of proximity of two or multiple terminals in physical locations is used to perform communication, that is, two mobile terminals may perform communication by using a neighbor discovery message. Therefore, during implementation of D2D communication, how to ensure synchronization of proximity discovery messages between terminals becomes very important. At present, in existing mobile communications technologies, a separate synchronization system is used to perform synchronization of proximity discovery between terminals. Specifically, the synchronization system uses an independent frequency resource of 2.4 GHz with a bandwidth of 5 MHz. The synchronization system uses a wide area network WAN or a Global Positioning System GPS as a primary synchronization source to perform synchronization of proximity discovery of terminals in a mobile network. In this way, each terminal may send and receive a proximity discovery message at a set time, and therefore D2D communication between different terminals can be implemented.

However, a separate frequency source needs to be occupied when a synchronization system is used to perform synchronization of proximity discovery between mobile terminals in the prior art, which easily causes a conflict with or interference on a frequency source of a mobile communications system and is not conducive to normal use of D2D communication.

US 2011/258313 A1 discloses that for network-assisted peer discovery, a device may register with a network entity so that the presence of the device and possibly other information about the device can be made known to the network entity. Specifically, it discloses that a directory agent may notify serving base station about the match between two devices to enable base station to assist these devices perform peer discovery. For example, the base station may determine one or more parameters for peer discovery such as: which pilot sequence to use, which device should send/receive signal, and time and frequency resources to use etc. and may send a scheduling decision to indicate whether P2P communication or WAN communication is selected for the two devices.

WO 01/15387 A1 discloses a method for Direct Mode (DM) communication between two mobile terminals in an access point (AP) controlled WLAN system. In a DM scheme, the AP may send address identifiers of the first mobile terminal and the second mobile terminal to the second and first mobile terminals, respectively, and send received signal strength (RSS) measurements performed by the first and second mobile terminals of mobile terminal identifier messages sent to them by the second and first mobile terminals, respectively. In another occasion, the AP may have a mapping table of the local unique identifiers of each MT in its cell in its database. Therefore, the AP is able to check its database to determine whether or not a remote MT is able to support a DM connection.

### SUMMARY

Embodiments of the present invention provide a device-to-device communication methods and apparatuses according to independent claims 1,3,6,8, 11 and 14. Further aspects are covered by the dependent claims.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a device-to-device communication method according to Embodiment 1 of the present invention;
FIG. 2 is a schematic flowchart of a device-to-device communication method according to Embodiment 2 of the present invention;
FIG. 3 is a schematic flowchart of a device-to-device communication method according to Embodiment 3 of the present invention;
FIG. 4 is a schematic flowchart of a method of implementing device-to-device communication according to Embodiment 4 of the present invention;
FIG. 5 is a schematic structural diagram of a device-to-device communication apparatus according to Embodiment 5 of the present invention;
FIG. 6 is a schematic structural diagram of a device-to-device communication apparatus according to Embodiment 6 of the present invention;
FIG. 7 is a schematic structural diagram of a device-to-device communication apparatus according to Embodiment 7 of the present invention;
FIG. 8 is a schematic structural diagram of a device-to-device communication apparatus according to Embodiment 8 of the present invention;
FIG. 9 is a schematic structural diagram of a device-to-device communication apparatus according to Embodiment 9 of the present invention;
FIG. 10 is a schematic structural diagram of a base station according to Embodiment 10 of the present invention;
FIG. 11 is a schematic structural diagram of a base station according to Embodiment 11 of the present invention; and
FIG. 12 is a schematic structural diagram of a communications system according to Embodiment 12 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

In a device-to-device communication method according to the embodiments of the present invention, a frequency resource in a mobile communications network may be used, on a basis of a conventional mobile communications network, to send and receive a proximity discovery message, thereby implementing D2D communication between terminals in the mobile communications network. The following describes D2D communication between terminals in a mobile communications system by using different embodiments.

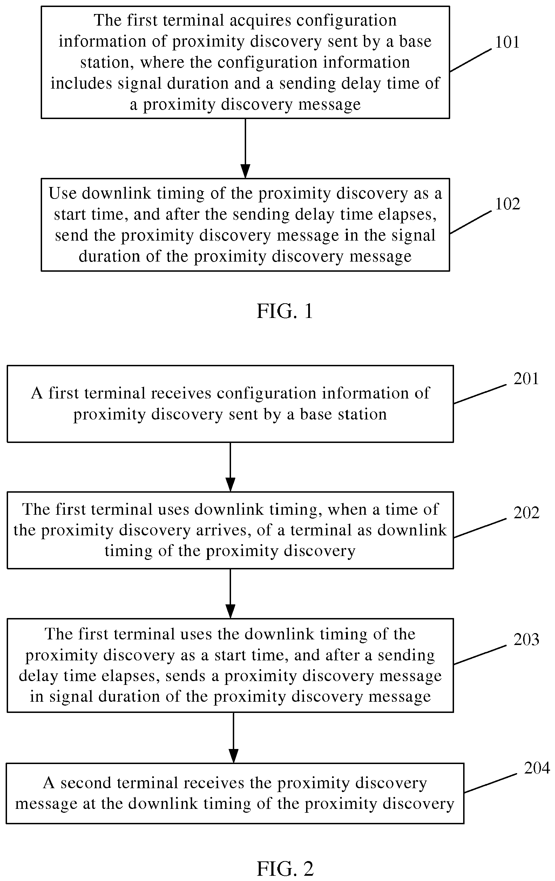

FIG. 1 is a schematic flowchart of a device-to-device communication method according to Embodiment 1 of the present invention. This embodiment may be applied in D2D communication between terminals in a mobile communications network, where a first terminal is a sending terminal of a proximity discovery message, and a second terminal is a receiving terminal of the proximity discovery message. Specifically, as shown in FIG. 1, the method in this embodiment may include the following steps:
Step 101: The first terminal acquires configuration information of proximity discovery sent by a base station, where the configuration information includes signal duration and a sending delay time of a proximity discovery message.
Step 102: Use downlink timing of the proximity discovery as a start time, and after the sending delay time elapses, send the proximity discovery message in the signal duration of the proximity discovery message for the second terminal to receive the proximity discovery message at the downlink timing of the proximity discovery, where
   the downlink timing of the proximity discovery is downlink timing of the terminal in a downlink in a cell in which the base station is located.

In this embodiment, the first terminal may send the proximity discovery message in the sending delay time after the downlink timing of the proximity discovery of the first terminal; the second terminal may also receive the proximity discovery message according to the corresponding downlink timing, and the signal duration of the proximity discovery message is within a preset length, so that accurate transmission of the proximity discovery message between the first terminal and the second terminal may be ensured. The downlink timing of the proximity discovery refers to that: when a time of sending the proximity discovery arrives, the downlink timing of the terminal may be used as synchronization timing of the proximity discovery, where the time of the proximity discovery may refer to a time that is separately allocated from a spectrum resource of a mobile communications system and used for the proximity discovery when the mobile communications system is deployed. The time of the proximity discovery may be configured by a network when the terminal is registered in a mobile communications network, or may be a time that is delivered by a base station in a cell merely for a terminal in the cell and used for the proximity discovery.

Persons skilled in the art may understand that downlink timing of a downlink in a cell is timing that is used for synchronization between terminals in a mobile communications system, where the downlink timing is delivered by a base station in a cell in which a terminal is located; when the first terminal sends a proximity message a base station in a cell in which the terminal is located does not perform mobile communication. In this case, the base station sends a proximity discovery message at downlink timing of the proximity discovery, and a spectrum resource in this period of time when the base station sends the proximity discovery message is used by the first terminal for D2D communication.

To sum up, in the device-to-device communication method according to this embodiment of the present invention, a proximity discovery message may be sent or received at downlink timing of a terminal, so that the proximity discovery message may be sent and received over a time-frequency resource for mobile communication without a need to additionally dispose a synchronization system and without a need of an extra frequency resource for performing synchronization, which can effectively overcome a problem that a frequency resource needs to be occupied separately when proximity discovery messages are synchronized in the prior art and this leads to interference on or a conflict with a frequency resource of a mobile communications system.

FIG. 2 is a schematic flowchart of a device-to-device communication method according to Embodiment 2 of the present invention. On a basis of the technical solution in the embodiment shown in FIG. 1, as shown in FIG. 2, configuration information sent by a base station in this embodiment further includes a time of proximity discovery, where the time of the proximity discovery is specifically a time reserved for the proximity discovery in a time-frequency resource of a communications system in which the base station is located. For example, in an existing spectrum resource, 1 ms out of every 80 ms may be reserved as the time of the proximity discovery. Specifically, as shown in FIG. 2, the method in this embodiment may include the following steps:
Step 201: A first terminal receives configuration information of proximity discovery sent by a base station, where the configuration information includes: signal duration, a sending delay time, and a proximity discovery time of the proximity discovery message.
Step 202: The first terminal uses downlink timing, when the time of the proximity discovery arrives, of a terminal as downlink timing of the proximity discovery.
Step 203: The first terminal uses the downlink timing of the proximity discovery as a start time, and after the sending delay time elapses, sends the proximity discovery message in the signal duration of the proximity discovery message.
Step 204: A second terminal receives the proximity discovery message at the downlink timing of the proximity discovery.

In this embodiment, for different communications systems, sending delay times may be different, and signal duration of the proximity discovery message may also be different, as long as the proximity discovery message sent in the delay time can be accurately received by a receiving terminal. Generally, the signal duration may be a length of one subframe of a current communications system.

In this embodiment, the time reserved by the foregoing base station for the proximity discovery may specifically refer to a periodic time. For example, 1 ms out of every 80 ms is reserved as the time of the proximity discovery. Persons skilled in the art may understand that in a Long Term Evolution (Long Term Evolution, LTE) system, a time occupied by every subframe is 1 ms. Therefore, in the LTE system, the reserved time refers to that each time 80 subframes are sent in a current mobile communications system, 1 subframe is used as a time of sending proximity discovery. A specific format of the time reserved for the proximity discovery is not limited in this embodiment, as long as the terminal may determine, according to the reserved time, the downlink timing of the proximity discovery for performing the proximity discovery.

When the method in this embodiment is applied in a mobile communications system in a frequency division duplexing (Frequency Division Duplexing, FDD) mode, the sending delay time may be greater than or equal to a radio frequency (Radio Frequency, RF) receive/transmit transition time, which avoids causing influence on communication of an existing mobile communications system. When the method in this embodiment is applied in a mobile communications system in a time division duplexing (Time Division Duplexing, TDD) mode, the sending delay time may be specifically greater than or equal to 0, which avoids causing influence on communication of an existing mobile communications system. Persons skilled in the art may understand that in an actual application, a sending delay time, two times a radio frequency delay time, and signal duration of a proximity discovery message should be less than a period of time (for example 1 ms) that is reserved by a base station for the proximity discovery message, where the radio frequency delay time refers to a radio frequency delay time of a terminal in a mobile communications system. The following will describe specific implementation of the method in this embodiment in an FDD mode and in a TDD mode.

In this embodiment, the signal duration of the proximity discovery message specifically refers to duration for sending or receiving the proximity discovery message, and the signal duration is less than or equal to a length of one subframe of a communications system in which the base station is located. In this way, when sending proximity discovery, merely one subframe of an existing system needs to be occupied, which does not affect normal communication of a mobile communications system. Specifically, the signal duration may be represented by using an OFDM symbol. In a mobile communications system, one subframe, that is, signal duration of one proximity discovery message, is 1 ms, and therefore, the time is generally not more than 13 OFDM symbols, that is, the signal duration is not more than (13/14) ms.

Persons skilled in the art may understand that for different communications systems, a sending delay time used for proximity discovery and a time reserved for the proximity discovery may be different. For example, for an LTE system, because a time occupied by each subframe is 1 ms when the system performs communication, signal duration of a proximity discovery message may be set to 1 ms, and one proximity discovery message may be sent in every 80 ms, that is, in every 80 subframes. In an actual application, 1 ms out of 60 ms or 120 ms may also be used to send a proximity discovery message, which is not particularly limited in this embodiment.

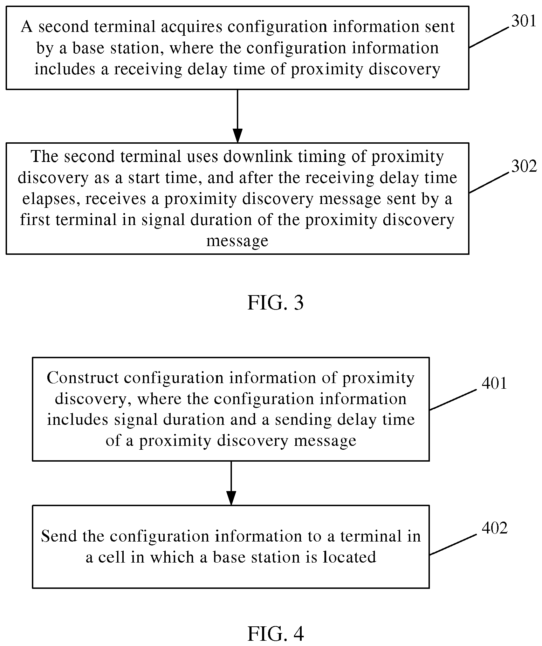

FIG. 3 is a schematic flowchart of a device-to-device communication method according to Embodiment 3 of the present invention. An execution body of the method in this embodiment is the foregoing second terminal. The second terminal may receive a proximity discovery message according to a receiving delay time in configuration information. Specifically, as shown in FIG. 3, the method in this embodiment may include the following steps:
Step 301: The second terminal acquires configuration information sent by a base station, where the configuration information includes a receiving delay time of proximity discovery and signal duration of a proximity discovery message.
Step 302: The second terminal uses downlink timing of proximity discovery as a start time, and after the receiving delay time elapses, receives, in the signal duration of the proximity discovery message, the proximity discovery message sent by a first terminal, where
   the downlink timing of the proximity discovery is downlink timing of the terminal in a downlink in a cell in which the base station is located.

In this embodiment, the second terminal may receive the proximity discovery message sent by the first terminal based on the method shown in FIG. 1 or FIG. 2; and the signal duration of the proximity discovery message in this embodiment is the same as the signal duration in the method shown in FIG. 1 or FIG. 2.

In this embodiment, the configuration information sent by the base station may further include a time of the proximity discovery, where the time of the proximity discovery is a time reserved for the proximity discovery in a time-frequency resource in a communications system in which the base station is located. Before step 302, the method further includes: using downlink timing, when the time of the proximity discovery arrives, of the terminal as the downlink timing of the proximity discovery.

This embodiment is applied in a mobile communications system in an FDD mode and in a TDD mode, the foregoing receiving delay time may specifically be two times the sum of the sending delay time for the proximity discovery in the first terminal and a radio frequency delay time. In this way, it can be ensured that a message sent by the first terminal can be received by the second terminal.

Persons skilled in the art may understand that the downlink timing of the terminal in the downlink is timing, which is used for regularly receiving information delivered by a base station, of the terminal in a communication cell in which the base station is located, and the timing is a time used by the base station to perform synchronization.

Persons skilled in the art may understand that in the foregoing embodiments of the present invention, configuration information sent by a base station to each terminal may include a sending delay time, and may also include a receiving delay time. In this way, a terminal may perform, based on the configuration information, sending of proximity discovery, or receiving of the proximity discovery.

FIG. 4 is a schematic flowchart of a method of implementing device-to-device communication according to Embodiment 4 of the present invention. As shown in FIG. 4, an execution body of the method in this embodiment is a base station. The base station may send configuration information of proximity discovery to a terminal in a cell in which the base station is located, so that a mobile terminal may implement D2D communication. Specifically, as shown in FIG. 4, the method in this embodiment may include the following steps:
Step 401: Construct configuration information of proximity discovery, where the configuration information includes signal duration and a sending delay time of a proximity discovery message.
Step 402: Send the configuration information to a terminal in a cell in which a base station is located, so that the terminal may send the proximity discovery message in the signal duration of the proximity discovery message and in the sending delay time after downlink timing of the proximity discovery, where
   the downlink timing of the proximity discovery is downlink timing of the terminal in a downlink in the cell in which the base station is located.

In this embodiment, the configuration information may merely include the signal duration of the proximity discovery message and a receiving delay time, so that the terminal receives the proximity discovery message in the receiving delay time after the downlink timing of the proximity discovery. Alternatively, the configuration information may also include the signal duration of the proximity discovery message, the sending delay time, and the receiving delay time, so that the terminal may send or receive the proximity discovery message according to a status of the terminal.

In this embodiment, the configuration information may also carry a time of the proximity discovery, where the time of the proximity discovery is specifically a time reserved for the proximity discovery in a time-frequency resource of a communications system in which the base station is located, so that the terminal may use downlink timing, when the time of the proximity discovery arrives, of the terminal as the downlink timing of the proximity discovery. The time of the proximity discovery may also be configured by a network when the terminal is registered in a mobile communications network.

Persons skilled in the art may understand that a base station reserves a time for proximity discovery. When the time arrives, the base station may not perform communication. During this period of time, a resource is occupied for D2D communication.

Persons skilled in the art may understand that in an actual application, when a base station sends configuration information, a sending delay time, a receiving delay time, signal duration, and a time of proximity discovery may be carried in the configuration information, and sent to each terminal.

To facilitate understanding of the technical solution of this embodiment of the present invention, implementation of D2D communication in a mobile communications system in an FDD mode and in a TDD mode in an LTE system is described in the following.

Assuming that Trtt(A) is a transmission delay time from an air interface of a base station eNB to an air interface of a first terminal, namely, a transmitting UE, and UE_RF_DLY(A) is a radio frequency delay time of the first terminal; Trtt(B) is a transmission delay time from the air interface of the eNB to an air interface of a second terminal, namely, a receiving UE; UE_RF_DLY(B) is a radio frequency delay time of the receiving UE; Trtt(D2D) is a transmission delay time from the air interface of the transmitting UE to the air interface of the receiving UE; and Ttx_rx is a radio frequency receive/transmit transition time of a UE. In this embodiment, assuming that the radio frequency receive/transmit transition time of a UE is 10 us, and the radio frequency delay time of the UE is 1 us, then in a communications system in an FDD mode, considering the delay time of the UE for receiving or sending a message, it may be determined that as long as an eNB configuration transmitting terminal transmits a D2D discovery signal 10 us after downlink timing of the transmitting terminal; a D2D discovery subframe has 13 symbols; and a receiving terminal starts to receive the D2D discovery signal in 12 us after downlink timing of the receiving terminal, synchronization of proximity discovery between a sending UE and a receiving UE can be ensured. Meanwhile, in order to avoid an overlapping time advance (Time Advance, Ta) length risk caused by a proximity discovery message and a next uplink sending message when the proximity discovery message is sent. The signal duration of the proximity discovery message in this embodiment may be set to be less than or equal to 14 characters. In this way, an overlapping TA length risk that is caused by a proximity discovery message sent by a sending UE and a next uplink discovery message can be effectively avoided. Specifically, in this embodiment, a proximity discovery message with a length of 13 characters may be used. It can be seen that in an FDD mode, according to the technical solution of this embodiment of the present invention, synchronization of proximity discovery may be implemented by setting a sending delay time and a receiving delay time as above, thereby implementing D2D communication.

Likewise, in a TDD mode, an eNB configuration transmitting UE transmits a proximity discovery message after downlink timing of the transmitting terminal, a receiving UE starts to receive the proximity discovery message 2 us after downlink timing of the receiving terminal, and signal duration of the proximity discovery message is set to 13 characters, so that synchronization of proximity discovery can also be ensured. Persons skilled in the art may understand that as long as two terminals may directly discover a signal mutually, the solution of this embodiment may also be applied in D2D communication between terminals located in different communication cells (that is, D2D communication between terminals belonging to different base stations). In addition, in order to avoid interference, a guard band may be filled in terminals in different cells, that is, filling a frequency domain Guard Band. The following uses a specific embodiment to describe D2D communication, in this embodiment, between a first terminal and a second terminal located in different cells.

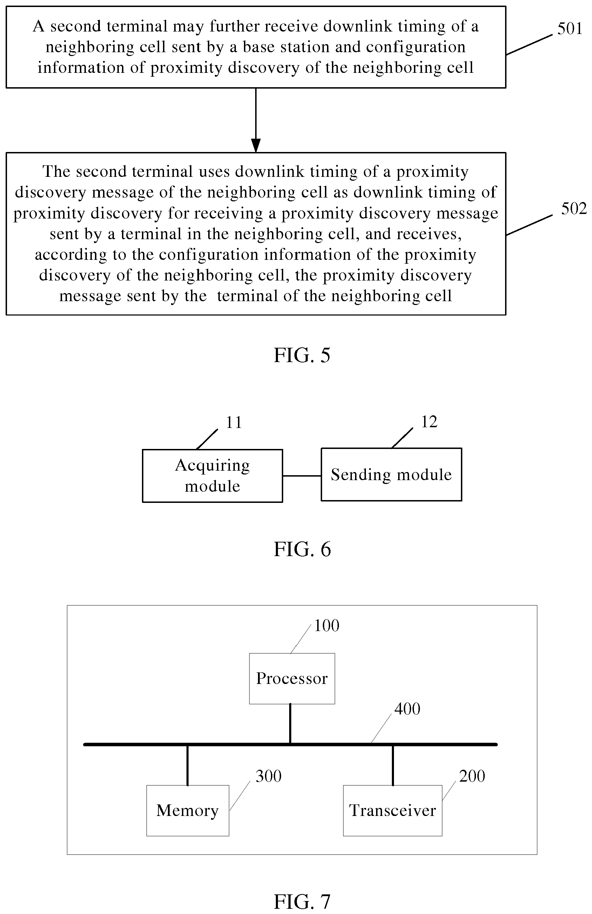

FIG. 5 is a schematic flowchart of a device-to-device communication method according to Embodiment 5 of the present invention. As shown in FIG. 5, on a basis of the technical solution of the embodiment shown in FIG. 3, as shown in FIG. 5, this embodiment may further include the following steps:
Step 501: A second terminal may further receive downlink timing of a neighboring cell sent by a base station and configuration information of proximity discovery of the neighboring cell.
Step 502: The second terminal uses downlink timing of a proximity discovery message of the neighboring cell as downlink timing of proximity discovery for receiving a proximity discovery message sent by a terminal in the neighboring cell, and receives, according to the configuration information of the proximity discovery of the neighboring cell, the proximity discovery message sent by the terminal in the neighboring cell, where
   the downlink timing of the neighboring cell and configuration information of the neighboring cell may be directly obtained by a base station in the cell by means of communication between the base stations.

Specifically, when a time of the proximity discovery arrives, if the downlink timing of the neighboring cell is earlier than downlink timing of the cell, then, before the downlink timing of the cell arrives, the downlink timing of the cell is replaced with the downlink timing of the neighboring cell and used as the downlink timing of the proximity discovery to receive a proximity discovery message, and after the proximity discovery message is received, the downlink timing is switched to the downlink timing of the cell; if the downlink timing of the neighboring cell is later than the downlink timing of the cell, then, after the downlink timing of the cell arrives, the downlink timing of the cell is replaced with the downlink timing of the neighboring cell and used as the downlink timing of the proximity discovery to receive a proximity discovery message. The configuration information of the proximity discovery is specifically the same as the configuration information of the proximity discovery shown in FIG. 4, both including signal duration of a proximity discovery message and a receiving delay time. In addition, the configuration information may also include the time of the proximity discovery, so that a base station may determine, according to the time of the proximity discovery, downlink timing of the proximity discovery, where the time of the proximity discovery refers to an allocated time when a terminal is registered in a mobile communications network, or may be a time delivered in the configuration information by a base station in a cell in which the terminal is located. For details, reference may be made to the description of the foregoing embodiments.

In addition, on a basis of the technical solution of the embodiment shown in FIG. 4, when a base station sends configuration information of proximity discovery, downlink timing of a neighboring cell and configuration information of proximity discovery of the neighboring cell further need to be acquired and sent to a terminal in the cell, so that the terminal receives, based on the sent downlink timing of the proximity discovery of the neighboring cell and the configuration information of the proximity discovery of the neighboring cell, a proximity discovery message sent by a terminal in the neighboring cell.

FIG. 6 is a schematic structural diagram of a device-to-device communication apparatus according to Embodiment 6 of the present invention. As shown in FIG. 6, the apparatus in this embodiment may include:
an acquiring module 11, configured to acquire configuration information of proximity discovery sent by a base station, where the configuration information includes signal duration and a sending delay time of a proximity discovery message; and
a sending module 12, configured to use downlink timing of the proximity discovery as a start time, and after the sending delay time elapses, send the proximity discovery message in the signal duration of the proximity discovery message, so that a receiving terminal may receive the proximity discovery message at the downlink timing of the proximity discovery, where
the downlink timing of the proximity discovery is downlink timing of the terminal in a downlink in a cell in which the base station is located.

The apparatus in this embodiment may be used as a sending terminal of a proximity discovery message, and is configured to send the proximity discovery message when the downlink timing arrives. For specific implementation thereof, reference may be made to the description of the foregoing method embodiments of the present invention.

In this embodiment, the configuration information further includes a time of the proximity discovery, where the time of the proximity discovery is a time reserved for the proximity discovery in a time-frequency resource in a communications system in which the base station is located. The sending module 12 may be further configured to use downlink timing, when the time of the proximity discovery arrives, of the terminal as the downlink timing of the proximity discovery.

The apparatus in this embodiment may be an apparatus applied in a mobile communications system in an FDD mode, and the sending delay time may be greater than or equal to an RF radio frequency receive/transmit transition time; or
the apparatus in this embodiment may also be an apparatus applied in a mobile communications system in a TDD mode, and the corresponding sending delay time is greater than or equal to 0.

In this embodiment, the signal duration is less than or equal to a length of one subframe of the communications system in which the base station is located.

FIG. 7 is a schematic structural diagram of a device-to-device communication apparatus according to Embodiment 7 of the present invention. As shown in FIG. 7, this embodiment includes a processor 100, a transceiver 200, a memory 300, and a bus 400, where the processor 100, the transceiver 200, and the memory 300 may be connected by using the bus 400, the memory 300 is configured to store an instruction, and the processor 100 executes the instruction to acquire configuration information of proximity discovery sent by a base station, where the configuration information includes signal duration and a sending delay time of a proximity discovery message, and to use downlink timing of the proximity discovery as a start time, and after the sending delay time elapses, send the proximity discovery message by using the transceiver in the signal duration of the proximity discovery message, so that a receiving terminal may receive the proximity discovery message at the downlink timing of the proximity discovery, where the downlink timing of the proximity discovery is downlink timing of the terminal in a downlink in a cell in which the base station is located.

In this embodiment, the configuration information may further include a time of the proximity discovery, where the time of the proximity discovery is a time reserved for the proximity discovery in a time-frequency resource in a communications system in which the base station is located. The processor 100 executes the instruction to further use downlink timing, when the time of the proximity discovery arrives, of the terminal as the downlink timing of the proximity discovery.

The apparatus in this embodiment may be an apparatus applied in a mobile communications system in an FDD mode, and the sending delay time is greater than or equal to an RF radio frequency receive/transmit transition time; or the apparatus in this embodiment may be an apparatus applied in a mobile communications system in a TDD mode, and the sending delay time is greater than or equal to 0.

In this embodiment, the signal duration is less than or equal to a length of one subframe of the communications system in which the base station is located.

In this embodiment, the transceiver is specifically a wireless communication component, and may receive and send a wireless communication signal.

The apparatus in this embodiment may send, based on the embodiment shown in FIG. 1 or FIG. 2, the proximity discovery message. For specific implementation thereof, reference may be made to the description of the foregoing method embodiments of the present invention.

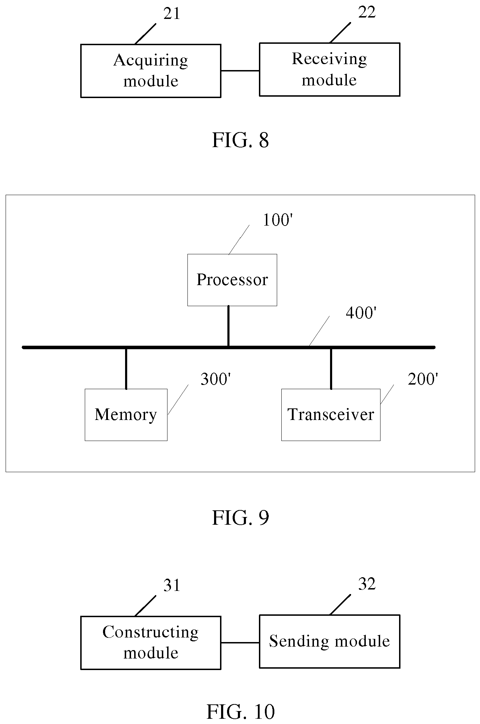

FIG. 8 is a schematic structural diagram of a device-to-device communication apparatus according to Embodiment 8 of the present invention. As shown in FIG. 8, the apparatus in this embodiment may include:
an acquiring module 21, configured to acquire configuration information sent by a base station, where the configuration information includes a receiving delay time of proximity discovery and signal duration of a proximity discovery message; and
a receiving module 22, configured to use downlink timing of the proximity discovery as a start time, and after the receiving delay time elapses, receive the proximity discovery message in the signal duration of the proximity discovery message, where
the downlink timing of the proximity discovery is downlink timing of a terminal in a downlink in a cell in which the base station is located.

The apparatus in this embodiment may be used as a receiving terminal of a proximity discovery message, and is configured to receive the proximity discovery message when the downlink timing arrives. For specific implementation thereof, reference may be made to the description of the foregoing method embodiments of the present invention.

In this embodiment, the configuration information further includes a time of the proximity discovery, where the time of the proximity discovery is a time reserved for the proximity discovery in a time-frequency resource in a communications system in which the base station is located. The receiving module 22 may be further configured to use downlink timing, when the time of the proximity discovery arrives, of the terminal as the downlink timing of the proximity discovery.

The apparatus in this embodiment may be an apparatus applied in a mobile communications system in an FDD mode or in a TDD mode. Correspondingly, the receiving delay time may specifically be two times the sum of the sending delay time and the radio frequency delay time of the proximity discovery.

Persons skilled in the art may understand that a same terminal may include functional modules of the apparatus shown in FIG. 6 and FIG. 7, so that the terminal may send a proximity discovery message and receive a proximity discovery message at the same time.

In this embodiment, the acquiring module 21 may be further configured to acquire downlink timing of a neighboring cell and configuration information of proximity discovery of the neighboring cell; and the receiving module 22 may be further configured to use downlink timing of the proximity discovery of the neighboring cell as downlink timing of proximity discovery for receiving a proximity discovery message sent by a terminal in the neighboring cell, and receive, according to the configuration information of the proximity discovery, the proximity discovery message sent by the terminal in the neighboring cell. In this way, the proximity discovery message sent by the terminal in the neighboring cell may be received, thereby implementing D2D communication between terminals in the neighboring cell. For specific implementation thereof, reference may be made to the description of the foregoing method embodiments of the present invention.

FIG. 9 is a schematic structural diagram of a device-to-device communication apparatus according to Embodiment 9 of the present invention. As shown in FIG. 9, the apparatus in this embodiment may include a processor 100', a transceiver 200', a memory 300', and a bus 400', where the processor 100', the transceiver 200', and the memory 300' may be connected by using the bus 400', the memory 300' is configured to store an instruction, and the processor 300' executes the instruction to acquire configuration information sent by a base station, where the configuration information includes a receiving delay time of proximity discovery and signal duration of a proximity discovery message, and to use downlink timing of the proximity discovery as a start time, and after the receiving delay time elapses, receive the proximity discovery message by using the transceiver in the signal duration of the proximity discovery message, where the downlink timing of the proximity discovery is downlink timing of a terminal in a downlink in a cell in which the base station is located.

In this embodiment, the configuration information may further include a time of the proximity discovery, where the time of the proximity discovery is a time reserved for the proximity discovery in a time-frequency resource in a communications system in which the base station is located. The processor 300' executes the instruction to further use downlink timing, when the time of the proximity discovery arrives, of the terminal as the downlink timing of the proximity discovery.

The apparatus in this embodiment may be an apparatus applied in a mobile communications system in an FDD mode or in a TDD mode. The receiving delay time may be two times the sum of a sending delay time and a radio frequency delay time of the proximity discovery.

In this embodiment, the processor 300' executes the instruction to further acquire downlink timing of a neighboring cell and configuration information of proximity discovery of the neighboring cell, and to use downlink timing of the proximity discovery of the neighboring cell as downlink timing of proximity discovery for receiving a proximity discovery message sent by a terminal in the neighboring cell, and receive, according to the configuration information of the proximity discovery, the proximity discovery message sent by the terminal in the neighboring cell.

The apparatus in this embodiment may receive a proximity discovery message based on the embodiment shown in FIG. 3 or FIG. 5. For specific implementation thereof, reference may be made to the description of the foregoing method embodiments of the present invention.

FIG. 10 is a schematic structural diagram of a base station according to Embodiment 10 of the present invention. As shown in FIG. 10, the base station in this embodiment may include:
a constructing module 31, configured to construct configuration information of proximity discovery, where the configuration information includes signal duration and a sending delay time of a proximity discovery message; and
a sending module 32, configured to send the configuration information to a terminal in a cell in which a base station is located, so that the terminal may send the proximity discovery message which length is less than or equal to the signal duration of the proximity discovery message in the sending delay time after downlink timing of the proximity discovery, where
the downlink timing of the proximity discovery is downlink timing of the terminal in a downlink in the cell in which the base station is located.

In this embodiment, the configuration information further includes a receiving delay time of the proximity discovery, so that the terminal receives a proximity discovery message in the receiving delay time after the downlink timing of the proximity discovery.

The apparatus in this embodiment may be used as a base station in a communication cell in which a sending terminal and a receiving terminal of a proximity discovery message are located, and is configured to deliver configuration information to a terminal, so that the terminal may send and receive the proximity discovery message when downlink timing arrives. For specific implementation thereof, reference may be made to the description of the foregoing method embodiments of the present invention.

In this embodiment, the sending module 32 may be further configured to acquire configuration information of proximity discovery of a neighboring cell, and send the configuration information of the proximity discovery of the neighboring cell and downlink timing of the neighboring cell to the terminal, so that the terminal receives, based on the downlink timing of the neighboring cell and the configuration information of the proximity discovery of the neighboring cell, a proximity discovery message sent by a base station in the neighboring cell.

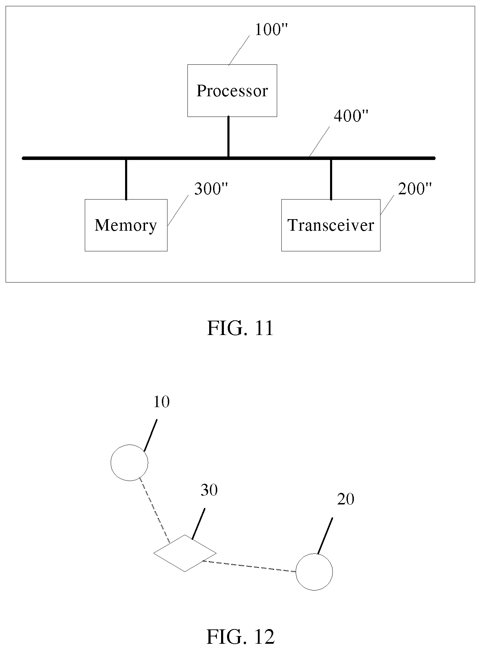

FIG. 11 is a schematic structural diagram of a base station according to Embodiment 11 of the present invention. As shown in FIG. 11, the base station in this embodiment may include a processor 100", a transceiver 200", a memory 300", and a bus 400", where the processor 100", the transceiver 200", and the memory 300" may be connected by using the bus 400", the memory 300" is configured to store an instruction, and the processor 100" executes the instruction to further construct configuration information of proximity discovery, where the configuration information includes signal duration and a sending delay time of a proximity discovery message, and to send the configuration information to a terminal in a cell in which the base station is located, so that the terminal sends the proximity discovery message in the signal duration of the proximity discovery message and in the sending delay time after downlink timing of the proximity discovery, where the downlink timing of the proximity discovery is downlink timing of the terminal in a downlink in the cell in which the base station is located.

In this embodiment, the configuration information may further include a receiving delay time of the proximity discovery, so that the terminal receives a proximity discovery message in the signal duration of the proximity discovery message and in the receiving delay time after the downlink timing of the proximity discovery.

In this embodiment, the processor 100" executes the instruction to further acquire configuration information of proximity discovery of a neighboring cell, and to send the configuration information of the proximity discovery of the neighboring cell and downlink timing of the neighboring cell to the terminal, so that the terminal receives, based on the downlink timing of the neighboring cell and the configuration information of the proximity discovery of the neighboring cell, a proximity discovery message sent by a base station in the neighboring cell.

The apparatus in this embodiment may send, based on the embodiment shown in FIG. 4, configuration information of proximity discovery, so that a terminal may perform sending or receiving of the proximity discovery based on the configuration information. For specific implementation thereof, reference may be made to the description of the foregoing method embodiments of the present invention.

FIG. 12 is a schematic structural diagram of a communications system according to Embodiment 12 of the present invention. As shown in FIG. 12, a communications system in this embodiment may include a first terminal 10, a second terminal 20, and a communications base station 30, where the first terminal 10 uses the device-to-device communication apparatus shown in FIG. 6 or FIG. 7, the second terminal uses the device-to-device communication apparatus shown in FIG. 8 or FIG. 9; and the communications base station 30 uses the base station shown in FIG. 10 or FIG. 11.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make replacements to some or all technical features thereof, without departing from the scope of the technical solutions of the embodiments of the present invention.

## Claims

1. A device-to-device communication method, comprising:
acquiring (101), by a sending terminal, configuration information of proximity discovery sent by a base station, wherein the proximity discovery comprises communication between the sending terminal and a receiving terminal by using a proximity discovery message, and the configuration information comprises signal duration and a sending delay time of the proximity discovery message; and
using (102), by the sending terminal, downlink timing of the proximity discovery as a start time, and after the sending delay time elapses, sending the proximity discovery message to the receiving terminal in the signal duration of the proximity discovery message, wherein
the downlink timing of the proximity discovery is downlink timing of the sending terminal in a cell in which the base station is located, and the downlink timing of the proximity discovery is used as synchronization timing of the proximity discovery.

2. The device-to-device communication method according to claim 1, wherein the configuration information further comprises a time of the proximity discovery, and the time of the proximity discovery is a time reserved for the proximity discovery in a time-frequency resource of a communications system in which the base station is located; and
before the using downlink timing of the proximity discovery as a start time, and after the sending delay time elapses, sending the proximity discovery message in the signal duration of the proximity discovery message, the method further comprises:
using downlink timing, when the time of the proximity discovery arrives, of a terminal as the downlink timing of the proximity discovery.

3. A device-to-device communication method, comprising:
acquiring (301), by a receiving terminal, configuration information sent by a base station, wherein the configuration information comprises a receiving delay time and signal duration of a proximity discovery message; and
using (302), by the receiving terminal, downlink timing of proximity discovery as a start time, and after the receiving delay time elapses, receiving the proximity discovery message in the signal duration of the proximity discovery message, the proximity discovery messages being sent by a sending terminal, wherein
the downlink timing of the proximity discovery is downlink timing of the receiving terminal in a cell in which the base station is located, and the downlink timing of the proximity discovery is used as synchronization timing of the proximity discovery.

4. The device-to-device communication method according to claim 3, wherein the configuration information further comprises a time of the proximity discovery, and the time of the proximity discovery is a time reserved for the proximity discovery in a time-frequency resource of a communications system in which the base station is located; and
before the using downlink timing of proximity discovery as a start time, and after the receiving delay time elapses, receiving the proximity discovery message in the signal duration of the proximity discovery message, the method further comprises:
using downlink timing, when the time of the proximity discovery arrives, of a terminal as the downlink timing of the proximity discovery.

5. The device-to-device communication method according to claim 3 or 4, further comprising:
acquiring downlink timing of a neighboring cell and configuration information of proximity discovery of the neighboring cell; and
using the downlink timing of the neighboring cell as downlink timing of proximity discovery for receiving a proximity discovery message sent by a terminal in the neighboring cell, and receiving, according to the configuration information of the proximity discovery, the proximity discovery message sent by the terminal in the neighboring cell.

6. A device-to-device communication method, comprising:
constructing (401), by a base station, configuration information of proximity discovery, wherein the proximity discovery comprises communication between a sending terminal and a receiving terminal in a cell in which the base station is located by using a proximity discovery message, and the configuration information comprises signal duration, and a sending delay time and/or a receiving delay time of the proximity discovery message; and
sending (402), by the base station, the configuration information to the sending terminal, configuring the sending terminal to send the proximity discovery message to the receiving terminal in the signal duration of the proximity discovery message after the sending delay time starting from downlink timing of the proximity discovery of the sending terminal, or configuring the receiving terminal to receive the proximity discovery message from the sending terminal in the signal duration of the proximity discovery message and after the receiving delay time starting from the downlink timing of the proximity discovery of the receiving terminal, wherein
the downlink timing of the proximity discovery of the sending terminal is downlink timing of the sending terminal in the cell in which the base station is located, the downlink timing of the proximity discovery of the receiving terminal is downlink timing of the receiving terminal in the cell, and the downlink timing of the proximity discovery of the sending terminal and the downlink timing of the proximity discovery of the receiving terminal are used as synchronization timing of the proximity discovery.

7. The device-to-device communication method according to claim 6, wherein the configuration information further comprises a time of the proximity discovery, configuring the sending terminal and/or receiving terminal to use downlink timing, when the time of the proximity discovery arrives, as the downlink timing of the proximity discovery.

8. The device-to-device communication method according to claim 6 or 7, further comprising:
acquiring configuration information of proximity discovery of a neighboring cell, and sending the configuration information of the proximity discovery of the neighboring cell and downlink timing of the neighboring cell to the receiving terminal, configuring the receiving terminal to receive, based on the downlink timing of the neighboring cell and the configuration information of the proximity discovery of the neighboring cell, a proximity discovery message sent by a terminal in the neighboring cell.

9. A device-to-device communication sending terminal, comprising:
an acquiring module (11), configured to acquire configuration information of proximity discovery sent by a base station, wherein the proximity discovery comprises communication between the sending terminal and a receiving terminal by using a proximity discovery message, and the configuration information comprises signal duration and a sending delay time of the proximity discovery message; and
a sending module (12), configured to use downlink timing of the proximity discovery as a start time, and after the sending delay time elapses, send the proximity discovery message to the receiving terminal in the signal duration of the proximity discovery message, wherein
the downlink timing of the proximity discovery is downlink timing of the terminal in a cell in which the base station is located, and the downlink timing of the proximity discovery is used as synchronization timing of the proximity discovery.

10. The device-to-device communication apparatus according to claim 9, wherein the configuration information further comprises a time of the proximity discovery, wherein the time of the proximity discovery is a time reserved for the proximity discovery in a time-frequency resource of a communications system in which the base station is located; and
the sending module (12) is further configured to use downlink timing, when the time of the proximity discovery arrives, of a terminal as the downlink timing of the proximity discovery.

11. A device-to-device communication receiving terminal, comprising:
an acquiring module (21), configured to acquire configuration information sent by a base station, wherein the configuration information comprises a receiving delay time and signal duration of a proximity discovery message; and
a receiving module (22), configured to use downlink timing of proximity discovery as a start time, and after the receiving delay time elapses, receive the proximity discovery message from a sending terminal in the signal duration of the proximity discovery message, wherein
the downlink timing of the proximity discovery is downlink timing of the receiving terminal in a cell in which the base station is located, and the downlink timing of the proximity discovery is used as synchronization timing of the proximity discovery.

12. The device-to-device communication apparatus according to claim 11, wherein the configuration information further comprises a time of the proximity discovery, wherein the time of the proximity discovery is a time reserved for the proximity discovery in a time-frequency resource of a communications system in which the base station is located; and
the receiving module (22) is further configured to use downlink timing, when the time of the proximity discovery arrives, of a terminal as the downlink timing of the proximity discovery.

13. The device-to-device apparatus according to claim 11 or 12, wherein the acquiring module is further configured to acquire downlink timing of a neighboring cell and configuration information of proximity discovery of the neighboring cell; and
the receiving module (22) is further configured to use downlink timing of the proximity discovery of the neighboring cell as downlink timing of proximity discovery for receiving a proximity discovery message sent by a terminal in the neighboring cell, and receive, according to the configuration information of the proximity discovery, the proximity discovery message sent by the terminal in the neighboring cell.

14. A base station, comprising:
a constructing module (31), configured to construct configuration information of proximity discovery, wherein the proximity discovery comprises communication between a sending terminal and a receiving terminal in a cell in which the base station is located by using a proximity discovery message, and the configuration information comprises signal duration, and a sending delay time and/or a receiving delay time of the proximity discovery message; and
a sending module (32), configured to send the configuration information to the sending terminal, configuring the sending terminal to send the proximity discovery message to the receiving terminal in the signal duration of the proximity discovery message after the sending delay time starting from downlink timing of the proximity discovery of the sending terminal, or configuring the receiving terminal to receive the proximity discovery from the sending terminal in the signal duration of the proximity discovery message after the receiving delay time starting from the downlink timing of the proximity discovery of the receiving terminal, wherein
the downlink timing of the proximity discovery of sending terminal is downlink timing of the sending terminal in the cell in which the base station is located, the downlink timing of the proximity discovery of receiving terminal is downlink timing of the receiving terminal in the cell, and the downlink timing of the proximity discovery of the sending terminal and the downlink timing of the proximity discovery of the receiving terminal are used as synchronization timing of the proximity discovery.

15. The base station according to claim 14, wherein the configuration information further comprises a time of the proximity discovery, configuring the sending terminal and/or receiving terminal to use downlink timing, when the time of the proximity discovery arrives, as the downlink timing of the proximity discovery.

16. The base station according to claim 14 or 15, wherein the sending module (32) is further configured to acquire configuration information of proximity discovery of a neighboring cell, and send the configuration information of the proximity discovery of the neighboring cell and downlink timing of the neighboring cell to the receiving terminal, configuring the receiving terminal to receive, based on the downlink timing of the neighboring cell and the configuration information of the proximity discovery of the neighboring cell, a proximity discovery message sent by a terminal in the neighboring cell.

## Patentansprüche

1. Vorrichtung-zu-Vorrichtung-Kommunikationsverfahren, umfassend:
Erfassen (101), durch ein Sendeendgerät, von durch eine Basisstation gesendeten Konfigurationsinformationen von Näherungsentdeckung, wobei die Näherungsentdeckung Kommunikation zwischen dem Sendeendgerät und einem Empfangsendgerät durch Verwenden einer Näherungsentdeckungsnachricht umfasst und die Konfigurationsinformationen Signaldauer und eine Sendelaufzeit der Näherungsentdeckungsnachricht umfassen; und
Verwenden (102), durch das Sendeendgerät, von Abwärtstakt der Näherungsentdeckung als Startzeit und nach Ablauf der Sendelaufzeit, Senden der Näherungsentdeckungsnachricht zu dem Empfangsendgerät in der Signaldauer der Näherungsentdeckungsnachricht, wobei der Abwärtstakt der Näherungsentdeckung Abwärtstakt des Sendeendgeräts in einer Zelle ist, in der sich die Basisstation befindet, und der Abwärtstakt der Näherungsentdeckung als Synchronisationstakt der Näherungsentdeckung benutzt wird.

2. Vorrichtung-zu-Vorrichtung-Kommunikationsverfahren nach Anspruch 1, wobei die Konfigurationsinformationen weiterhin eine Zeit der Näherungsentdeckung umfassen und die Zeit der Näherungsentdeckung eine für die Näherungsentdeckung in einer Zeit-Frequenz-Ressource eines Kommunikationssystems reservierte Zeit ist, in dem sich die Basisstation befindet; und
vor dem Verwenden von Abwärtstakt der Näherungsentdeckung als Startzeit und nach Ablauf der Sendelaufzeit, Senden der Näherungsentdeckungsnachricht in der Signaldauer der Näherungsentdeckungsnachricht das Verfahren weiterhin Folgendes umfasst:
Verwenden von Abwärtstakt, wenn die Zeit der Näherungsentdeckung kommt, eines Endgeräts als der Abwärtstakt der Näherungsentdeckung.

3. Vorrichtung-zu-Vorrichtung-Kommunikationsverfahren, umfassend:
Erfassen (301), durch ein Empfangsendgerät, von durch eine Basisstation gesendeten Konfigurationsinformationen, wobei die Konfigurationsinformationen eine Empfangslaufzeit und Signaldauer einer Näherungsentdeckungsnachricht umfassen; und
Verwenden (302), durch das Empfangsendgerät, von Abwärtstakt von Näherungsentdeckung als eine Startzeit und nach Ablauf der Empfangslaufzeit, Empfangen der Näherungsentdeckungsnachricht in der Signaldauer der Näherungsentdeckungsnachricht, wobei die Näherungsentdeckungsnachrichten durch ein Sendeendgerät gesendet werden, wobei
der Abwärtstakt der Näherungsentdeckung Abwärtstakt des Empfangsendgeräts in einer Zelle ist, in der sich die Basisstation befindet, und der Abwärtstakt der Näherungsentdeckung als Synchronisationstakt der Näherungsentdeckung benutzt wird.

4. Vorrichtung-zu-Vorrichtung-Kommunikationsverfahren nach Anspruch 3, wobei die Konfigurationsinformationen weiterhin eine Zeit der Näherungsentdeckung umfassen und die Zeit der Näherungsentdeckung eine für die Näherungsentdeckung in einer Zeit-Frequenz-Ressource eines Kommunikationssystems reservierte Zeit ist, in der sich die Basisstation befindet; und
vor dem Verwenden von Abwärtstakt von Näherungsentdeckung als Startzeit und nach Ablauf der Empfangslaufzeit, Empfangen der Näherungsentdeckungsnachricht in der Signaldauer der Näherungsentdeckungsnachricht das Verfahren weiterhin Folgendes umfasst:
Verwenden von Abwärtstakt, wenn die Zeit der Näherungsentdeckung kommt, eines Endgeräts als der Abwärtstakt der Näherungsentdeckung.

5. Vorrichtung-zu-Vorrichtung-Kommunikationsverfahren nach Anspruch 3 oder 4, weiterhin umfassend:
Erfassen von Abwärtstakt einer Nachbarzelle und Konfigurationsinformationen der Näherungsentdeckung der Nachbarzelle; und
Verwenden des Abwärtstakts der Nachbarzelle als Abwärtstakt von Näherungsentdeckung zum Empfangen einer durch ein Endgerät in der Nachbarzelle gesendeten Näherungsentdeckungsnachricht und Empfangen, gemäß den Konfigurationsinformationen der Näherungsentdeckung, der durch das Endgerät in der Nachbarzelle gesendeten Näherungsentdeckungsnachricht.

6. Vorrichtung-zu-Vorrichtung-Kommunikationsverfahren, umfassend:
Aufbauen (401), durch eine Basisstation, von Konfigurationsinformationen von Näherungsentdeckung, wobei die Näherungsentdeckung Kommunikation zwischen einem Sendeendgerät und einem Empfangsendgerät in einer Zelle umfasst, in der sich die Basisstation befindet, durch Verwenden einer Näherungsentdeckungsnachricht, und die Konfigurationsinformationen Signaldauer und eine Sendelaufzeit und/oder eine Empfangslaufzeit der Näherungsentdeckungsnachricht, umfassen; und
Senden (402), durch die Basisstation, der Konfigurationsinformationen zu dem Sendeendgerät, Einrichten des Sendeendgeräts zum Senden der Näherungsentdeckungsnachricht zu dem Empfangsendgerät in der Signaldauer der Näherungsentdeckungsnachricht nach der Sendelaufzeit beginnend am Abwärtstakt der Näherungsentdeckung des Sendeendgeräts oder: Einrichten des Empfangsgeräts zum Empfangen der Näherungsentdeckungsnachricht von dem Sendeendgerät in der Signaldauer der Näherungsentdeckungsnachricht und nach dem Empfangen der Laufzeit beginnend an dem Abwärtstakt der Näherungsentdeckung des Empfangsendgeräts, wobei
der Abwärtstakt der Näherungsentdeckung des Sendeendgeräts Abwärtstakt des Sendeendgeräts in der Zelle ist, in der sich die Basisstation befindet, der Abwärtstakt der Näherungsentdeckung des Empfangsgeräts Abwärtstakt des Empfangsendgeräts in der Zelle ist und der Abwärtstakt der Näherungsentdeckung des Sendeendgeräts und der Abwärtstakt der Näherungsentdeckung des Empfangsendgeräts als Synchronisationstakt der Näherungsentdeckung benutzt werden.

7. Vorrichtung-zu-Vorrichtung-Kommunikationsverfahren nach Anspruch 6, wobei die Konfigurationsinformationen weiterhin eine Zeit der Näherungsentdeckung umfassen, Einrichten des Sendeendgeräts und/oder Empfangsendgeräts zum Verwenden des Abwärtstakts, wenn die Zeit der Näherungsentdeckung kommt, als der Abwärtstakt der Näherungsentdeckung.

8. Vorrichtung-zu-Vorrichtung-Kommunikationsverfahren nach Anspruch 6 oder 7, weiterhin umfassend:
Erfassen von Konfigurationsinformationen von Näherungsentdeckung einer Nachbarzelle und Senden der Konfigurationsinformationen der Näherungsentdeckung der Nachbarzelle und Abwärtstakt der Nachbarzelle zu dem Empfangsendgerät, Einrichten des Empfangsendgeräts zum Empfangen,
basierend auf dem Abwärtstakt der Nachbarzelle und den Konfigurationsinformationen der Näherungsentdeckung der Nachbarzelle, einer durch ein Endgerät in der Nachbarzelle gesendeten Näherungsentdeckungsnachricht.

9. Vorrichtung-zu-Vorrichtung-Kommunikationssendeendgerät, umfassend:
ein Erfassungsmodul (11), eingerichtet zum Erfassen von durch eine Basisstation gesendeten Konfigurationsinformationen von Näherungsentdeckung, wobei die Näherungsentdeckung Kommunikation zwischen dem Sendeendgerät und einem Empfangsendgerät durch Verwenden einer Näherungsentdeckungsnachricht umfasst und die Näherungsinformationen Signaldauer und eine Sendelaufzeit der Näherungsentdeckungsnachricht umfassen; und
ein Sendemodul (12), eingerichtet zum Verwenden von Abwärtstakt der Näherungsentdeckung als eine Startzeit und nach Ablaufen der Sendelaufzeit, Senden der Näherungsentdeckungsnachricht zu dem Empfangsendgerät in der Signaldauer der Näherungsentdeckungsnachricht, wobei
der Abwärtstakt der Näherungsentdeckung Abwärtstakt des Endgeräts in einer Zelle ist, in der sich die Basisstation befindet, und der Abwärtstakt der Näherungsentdeckung als Synchronisationstakt der Näherungsentdeckung benutzt wird.

10. Vorrichtung-zu-Vorrichtung-Kommunikationsgerät nach Anspruch 9, wobei die Konfigurationsinformationen weiterhin eine Zeit der Näherungsentdeckung umfassen, wobei die Zeit der Näherungsentdeckung eine für die Näherungsentdeckung in einer Zeit-Frequenz-Ressource eines Kommunikationssystems reservierte Zeit ist, in dem sich die Basisstation befindet; und das Sendemodul (12) weiterhin eingerichtet ist zum Verwenden von Abwärtstakt, wenn die Zeit der Näherungsentdeckung kommt, eines Endgeräts als der Abwärtstakt der Näherungsentdeckung.

11. Vorrichtung-zu-Vorrichtung-Kommunikationsempfangsendgerät, umfassend:
ein Erfassungsmodul (21), eingerichtet zum Erfassen von durch eine Basisstation gesendeten Konfigurationsinformationen, wobei die Konfigurationsinformationen eine Empfangslaufzeit und Signaldauer einer Näherungsentdeckungsnachricht umfassen; und
ein Empfangsmodul (22), eingerichtet zum Verwenden von Abwärtstakt von Näherungsentdeckung als eine Startzeit und nach Ablauf der Empfangslaufzeit, Empfangen der Näherungsentdeckungsnachricht von einem Sendeendgerät in der Signaldauer der Näherungsentdeckungsnachricht, wobei der Abwärtstakt der Näherungsentdeckung Abwärtstakt des Empfangsendgeräts in einer Zelle ist, in der sich die Basisstation befindet, und der Abwärtstakt der Näherungsentdeckung als Synchronisationstakt der Näherungsentdeckung benutzt wird.

12. Vorrichtung-zu-Vorrichtung-Kommunikationsgerät nach Anspruch 11, wobei die Konfigurationsinformationen weiterhin eine Zeit der Näherungsentdeckung umfassen, wobei die Zeit der Näherungsentdeckung eine für die Näherungsentdeckung in einer Zeit-Frequenz-Ressource eines Kommunikationssystems reservierte Zeit ist, in dem sich die Basisstation befindet; und das Empfangsmodul (22) weiterhin eingerichtet ist zum Verwenden von Abwärtstakt, wenn die Zeit der Näherungsentdeckung kommt, eines Endgeräts als der Abwärtstakt der Näherungsentdeckung.

13. Vorrichtung-zu-Vorrichtung-Gerät nach Anspruch 11 oder 12, wobei das Erfassungsmodul weiterhin eingerichtet ist zum Erfassen von Abwärtstakt einer Nachbarzelle und Konfigurationsinformationen von Näherungsentdeckung der Nachbarzelle; und
das Empfangsmodul (22) weiterhin eingerichtet ist zum Verwenden von Abwärtstakt der Näherungsentdeckung der Nachbarzelle als Abwärtstakt von Näherungsentdeckung zum Empfangen einer durch ein Endgerät in der Nachbarzelle gesendeten Näherungsentdeckungsnachricht und Empfangen, gemäß den Konfigurationsinformationen der Näherungsentdeckung, der durch das Endgerät in der Nachbarzelle gesendeten Näherungsentdeckungsnachricht.

14. Basisstation, umfassend:
ein Aufbaumodul (31), eingerichtet zum Aufbauen von Konfigurationsinformationen von Näherungsentdeckung, wobei die Näherungsentdeckung Kommunikation zwischen einem Sendeendgerät und einem Empfangsendgerät in einer Zelle umfasst, in der sich die Basisstation befindet, durch Verwenden einer Näherungsentdeckungsnachricht, und die Konfigurationsinformationen Signaldauer und eine Sendelaufzeit und/oder Empfangslaufzeit der Näherungsentdeckungsnachricht umfassen; und
ein Sendemodul (32), eingerichtet zum Senden der Konfigurationsinformationen zu dem Sendeendgerät, Einrichten des Sendeendgeräts zum Senden der Näherungsentdeckungsnachricht zu dem Empfangsendgerät in der Signaldauer der Näherungsentdeckungsnachricht nach der Sendelaufzeit beginnend am Abwärtstakt der Näherungsentdeckung des Sendeendgeräts, oder Einrichten des Empfangsendgeräts zum Empfangen der Näherungsentdeckung von dem Sendeendgerät in der Signaldauer der Näherungsentdeckungsnachricht nach der Empfangslaufzeit beginnend am Abwärtstakt der Näherungsentdeckung des Empfangsendgeräts, wobei
der Abwärtstakt der Näherungsentdeckung des Sendeendgeräts Abwärtstakt des Sendeendgeräts in der Zelle ist, in der sich die Basisstation befindet, der Abwärtstakt der Näherungsentdeckung des Empfangsendgeräts Abwärtstakt des Empfangsendgeräts in der Zelle ist und der Abwärtstakt der Näherungsentdeckung des Sendeendgeräts und der Abwärtstakt der Näherungsentdeckung des Empfangsendgeräts als Synchronisationstakt der Näherungsentdeckung benutzt werden.

15. Basisstation nach Anspruch 14, wobei die Konfigurationsinformationen weiterhin eine Zeit der Näherungsentdeckung umfassen, Einrichten des Sendeendgeräts und/oder Empfangsendgeräts zum Verwenden von Abwärtstakt, wenn die Zeit der Näherungsentdeckung kommt, als der Abwärtstakt der Näherungsentdeckung.

16. Basisstation nach Anspruch 14 oder 15, wobei das Sendemodul (32) weiterhin eingerichtet ist zum Erfassen von Konfigurationsinformationen von Näherungsentdeckung einer Nachbarzelle und Senden der Konfigurationsinformationen der Näherungsentdeckung der Nachbarzelle und Abwärtstakt der Nachbarzelle zum Empfangsendgerät, Einrichten des Empfangsendgeräts zum Empfangen basierend auf dem Abwärtstakt der Nachbarzelle und den Konfigurationsiriformationen der Näherungsentdeckung der Nachbarzelle, einmal durch ein Endgerät in der Nachbarzelle gesendeten Näherungsentdeckungsnachricht.

## Revendications

1. Procédé de communication de dispositif à dispositif, comprenant les étapes suivantes :
acquérir (101), par un terminal d'envoi, des informations de configuration de découverte de proximité envoyées par une station de base, où la découverte de proximité comprend une communication entre le terminal d'envoi et un terminal de réception en utilisant un message de découverte de proximité, et les informations de configuration comprennent une durée de signal et un temps d'attente d'envoi du message de découverte de proximité ; et
utiliser (102), par le terminal d'envoi, le cadencement de liaison descendante de la découverte de proximité comme temps de début et, après que le temps d'attente d'envoi s'est écoulé, envoyer le message de découverte de proximité au terminal de réception dans la durée du signal du message de découverte de proximité, où le cadencement de liaison descendante de la découverte de proximité est un cadencement de liaison descendante du terminal d'envoi dans une cellule dans laquelle la station de base est située, et le cadencement de liaison descendante de la découverte de proximité est utilisé comme cadencement de synchronisation de la découverte de proximité.

2. Procédé de communication de dispositif à dispositif selon la revendication 1, dans lequel les informations de configuration comprennent en outre un temps de la découverte de proximité, et le temps de la découverte de proximité est un temps réservé pour la découverte de proximité dans une ressource temps-fréquence d'un système de communication dans lequel est située la station de base ; et
avant l'utilisation du cadencement de liaison descendante de la découverte de proximité comme un temps de début, et après que le temps d'attente d'envoi a expiré, le procédé comprend d'envoyer le message de découverte de proximité dans la durée du signal du message de découverte de proximité, le procédé comprend en outre l'étape suivante :
utiliser le cadencement de liaison descendante, lorsque le temps de la découverte de proximité arrive, d'un terminal comme cadencement de liaison descendante de la découverte de proximité.

3. Procédé de communication de dispositif à dispositif, comprenant les étapes suivantes :
acquérir (301), par un terminal de réception, des informations de configuration envoyées par une station de base, où les informations de configuration comprennent un temps d'attente de réception et une durée du signal d'un message de découverte de proximité ; et
utiliser (302), par le terminal de réception, le cadencement de liaison descendante de la découverte de proximité comme temps de début et, après que le temps d'attente de réception s'est écoulé, recevoir le message de découverte de proximité dans la durée du signal du message de découverte de proximité, les messages de découverte de proximité étant envoyés par un terminal d'envoi, où
le cadencement de liaison descendante de la découverte de proximité est un cadencement de liaison descendante du terminal de réception dans une cellule dans laquelle se situe la station de base, et le cadencement de liaison descendante de la découverte de proximité est utilisé comme cadencement de synchronisation de la découverte de proximité.

4. Procédé de communication de dispositif à dispositif selon la revendication 3, dans lequel les informations de configuration comprennent en outre un temps de la découverte de proximité, et le temps de la découverte de proximité est un temps réservé pour la découverte de proximité dans une ressource temps-fréquence d'un système de communication dans lequel se situe la station de base ; et
avant l'utilisation du cadencement de liaison descendante de la découverte de proximité comme un temps de début, et après que le temps d'attente de réception s'est écoulé, le procédé comprend de recevoir le message de découverte de proximité dans la durée du signal du message de découverte de proximité, le procédé comprenant en outre l'étape suivante :
utiliser un cadencement de liaison descendante, lorsque le temps de la découverte de proximité arrive, d'un terminal comme cadencement de liaison descendante de la découverte de proximité.

5. Procédé de communication de dispositif à dispositif selon la revendication 3 ou la revendication 4, comprenant en outre les étapes suivantes :
acquérir un cadencement de liaison descendante d'une cellule voisine et des informations de configuration de la découverte de proximité de la cellule voisine ; et
utiliser le cadencement de liaison descendante de la cellule voisine comme cadencement de liaison descendante de découverte de proximité pour recevoir un message de découverte de proximité envoyé par un terminal dans la cellule voisine, et recevoir, selon les informations de configuration de la découverte de proximité, le message de découverte de proximité envoyé par le terminal dans la cellule voisine.

6. Procédé de communication de dispositif à dispositif, comprenant les étapes suivantes :
construire (401), par une station de base, des informations de configuration de découverte de proximité, où la découverte de proximité comprend une communication entre un terminal d'envoi et un terminal de réception dans une cellule dans laquelle est située la station de base à l'aide d'un message de découverte de proximité, et les informations de configuration comprennent une durée du signal et un temps d'attente d'envoi et/ou un temps d'attente de réception du message de découverte de proximité ; et
envoyer (402), par la station de base, les informations de configuration au terminal d'envoi,
configurer le terminal d'envoi pour envoyer le message de découverte de proximité au terminal de réception dans la durée du signal du message de découverte de proximité après le temps d'attente d'envoi commençant à un cadencement de liaison descendante de la découverte de proximité du terminal d'envoi, ou configurer le terminal de réception pour recevoir le message de découverte de proximité provenant du terminal d'envoi dans la durée du signal du message de découverte de proximité et après le temps d'attente de réception commençant au cadencement de liaison descendante de la découverte de proximité du terminal de réception, où
le cadencement de liaison descendante de la découverte de proximité du terminal d'envoi est un cadencement de liaison descendante du terminal d'envoi dans la cellule dans laquelle est située la station de base, le cadencement de liaison descendante de la découverte de proximité du terminal de réception est un cadencement de liaison descendante du terminal de réception dans la cellule, et le cadencement de liaison descendante de la découverte de proximité du terminal d'envoi et le cadencement de liaison descendante de la découverte de proximité du terminal de réception sont utilisés comme cadencement de synchronisation de la découverte de proximité.

7. Procédé de communication de dispositif à dispositif selon la revendication 6, dans lequel les informations de configuration comprennent en outre un temps de la découverte de proximité, le procédé comprenant de configurer le terminal d'envoi et/ou le terminal de réception pour utiliser le cadencement de liaison descendante, lorsque le temps de la découverte de proximité arrive, comme cadencement de liaison descendante de la découverte de proximité.

8. Procédé de communication de dispositif à dispositif selon la revendication 6 ou la revendication 7, comprenant en outre les étapes suivantes :
acquérir des informations de configuration de découverte de proximité d'une cellule voisine, et envoyer les informations de configuration de la découverte de proximité de la cellule voisine et le cadencement de liaison descendante de la cellule voisine au terminal de réception, configurer le terminal de réception pour recevoir, sur la base du cadencement de liaison descendante de la cellule voisine et des informations de configuration de la découverte de proximité de la cellule voisine, un message de découverte de proximité envoyé par un terminal dans la cellule voisine.

9. Terminal d'envoi de communication de dispositif à dispositif, comprenant :
un module d'acquisition (11), configuré pour acquérir des informations de configuration de découverte de proximité envoyées par une station de base, où la découverte de proximité comprend une communication entre le terminal d'envoi et un terminal de réception en utilisant un message de découverte de proximité, et les informations de configuration comprennent une durée de signal et un temps d'attente d'envoi du message de découverte de proximité ; et
un module d'envoi (12), configuré pour utiliser le cadencement de liaison descendante de la découverte de proximité comme temps de début et, après que le temps d'attente d'envoi s'est écoulé, envoyer le message de découverte de proximité au terminal de réception dans la durée du signal du message de découverte de proximité, où
le cadencement de liaison descendante de la découverte de proximité est un cadencement de liaison descendante du terminal dans une cellule dans laquelle la station de base est située, et le cadencement de liaison descendante de la découverte de proximité est utilisé comme cadencement de synchronisation de la découverte de proximité.

10. Appareil de communication de dispositif à dispositif selon la revendication 9, dans lequel les informations de configuration comprennent en outre un temps de la découverte de proximité, où le temps de la découverte de proximité est un temps réservé pour la découverte de proximité dans une ressource temps-fréquence d'un système de communication dans lequel est située la station de base ; et
le module d'envoi (12) est en outre configuré pour utiliser le cadencement de liaison descendante, lorsque le temps de la découverte de proximité arrive, d'un terminal comme cadencement de liaison descendante de la découverte de proximité.

11. Terminal de réception de communication de dispositif à dispositif, comprenant :
un module d'acquisition (21), configuré pour acquérir des informations de configuration envoyées par une station de base, où les informations de configuration comprennent un temps d'attente de réception et une durée du signal d'un message de découverte de proximité ; et
un module de réception (22), configuré pour utiliser le cadencement de liaison descendante de la découverte de proximité comme temps de début et, après que le temps d'attente de réception s'est écoulé, recevoir le message de découverte de proximité depuis un terminal d'envoi dans la durée du signal du message de découverte de proximité, où
le cadencement de liaison descendante de la découverte de proximité est un cadencement de liaison descendante du terminal de réception dans une cellule dans laquelle se situe la station de base, et le cadencement de liaison descendante de la découverte de proximité est utilisé comme cadencement de synchronisation de la découverte de proximité.

12. Appareil de communication de dispositif à dispositif selon la revendication 11, dans lequel les informations de configuration comprennent en outre un temps de la découverte de proximité, où le temps de la découverte de proximité est un temps réservé pour la découverte de proximité dans une ressource temps-fréquence d'un système de communication dans lequel est située la station de base ; et
le module de réception (22) est en outre configuré pour utiliser un cadencement de liaison descendante, lorsque le temps de la découverte de proximité arrive, d'un terminal comme cadencement de liaison descendante de la découverte de proximité.

13. Appareil de communication de dispositif à dispositif selon la revendication 11 ou la revendication 12, dans lequel le module d'acquisition est en outre configuré pour acquérir un cadencement de liaison descendante d'une cellule voisine et des informations de configuration de découverte de proximité de la cellule voisine ; et
le module de réception (22) est en outre configuré pour utiliser le cadencement de liaison descendante de la découverte de proximité de la cellule voisine comme cadencement de liaison descendante de découverte de proximité envoyé pour recevoir un message de découverte de proximité envoyé par un terminal dans la cellule voisine, et recevoir, selon les informations de configuration de la découverte de proximité, le message de découverte de proximité envoyé par le terminal dans la cellule voisine.

14. Station de base comprenant :
un module de construction (31), configuré pour construire des informations de configuration de découverte de proximité, où la découverte de proximité comprend une communication entre un terminal d'envoi et un terminal de réception dans une cellule dans laquelle est située la station de base à l'aide d'un message de découverte de proximité, et les informations de configuration comprennent une durée du signal et un temps d'attente d'envoi et/ou un temps d'attente de réception du message de découverte de proximité ; et
un module d'envoi (32), configuré pour envoyer les informations de configuration au terminal d'envoi, configurer le terminal d'envoi pour envoyer le message de découverte de proximité au terminal de réception dans la durée du signal du message de découverte de proximité après le temps d'attente d'envoi commençant à un cadencement de liaison descendante de la découverte de proximité du terminal d'envoi, ou configurer le terminal de réception pour recevoir la découverte de proximité provenant du terminal d'envoi dans la durée du signal du message de découverte de proximité et après le temps d'attente de réception commençant au cadencement de liaison descendante de la découverte de proximité du terminal de réception, où
le cadencement de liaison descendante de la découverte de proximité du terminal d'envoi est un cadencement de liaison descendante du terminal d'envoi dans la cellule dans laquelle est située la station de base, le cadencement de liaison descendante de la découverte de proximité du terminal de réception est un cadencement de liaison descendante du terminal de réception dans la cellule, et le cadencement de liaison descendante de la découverte de proximité du terminal d'envoi et le cadencement de liaison descendante de la découverte de proximité du terminal de réception sont utilisés comme cadencement de synchronisation de la découverte de proximité.

15. Station de base selon la revendication 14, dans laquelle les informations de configuration comprennent en outre un temps de la découverte de proximité, et de configurer le terminal d'envoi et/ou le terminal de réception pour utiliser le cadencement de liaison descendante, lorsque le temps de la découverte de proximité arrive, comme cadencement de liaison descendante de la découverte de proximité.

16. Station de base selon la revendication 14 ou la revendication 15, dans laquelle le module d'envoi (32) est en outre configuré pour acquérir des informations de configuration de découverte de proximité d'une cellule voisine, et envoyer les informations de configuration de la découverte de proximité de la cellule voisine et le cadencement de liaison descendante de la cellule voisine au terminal de réception, pour configurer le terminal de réception pour recevoir, sur la base du cadencement de liaison descendante de la cellule voisine et des informations de configuration de la découverte de proximité de la cellule voisine, un message de découverte de proximité envoyé par un terminal dans la cellule voisine.
